# EUROPEAN PATENT APPLICATION

(11) **EP 1 107 505 A2**
(43) Date of publication of application: **13.06.2001**
(21) Application number: 00125347.5
(22) Date of filing: 30.11.2000
(51) Int. Cl.: H04L 9/18

(54) **Polymorphous encryption system**

(30) Priority: 30.11.1999 US 167897 P
(71) Applicant: MD Technology S.A., Cdla. Kennedy, Guayaquil (EC)
(72) Inventor: Marroquin, Nestor Napoleon, Urdesa Norte, Guayaquil (EC)
(74) Representative: Altenburg, Udo, Dipl.-Phys.

(57) **Abstract**

The present invention is directed to a system, method, and apparatus for encrypting a message. A password is encrypted using a polymorphous coding function and used as a seed for a one-time pad generator. The one-time pad generator generates a one-time pad that is used to mask the message. Decryption of the encrypted message requires the password used during the encryption process and the polymorphous codification function. The foregoing are used to regenerate the mask. The regenerated mask is applied to the encrypted message, thereby providing the original message.

## Description

### CLAIM OF PRIORITY

The instant patent application claims priority from the United States provisional patent application designated with serial number 60/167, 891, entitled "Data Encryption System", by Nestor Marroquin filed on November 30, 1999, which is hereby incorporated by reference for all purposes,

### FIELD

The present invention relates to data transmission and processing, and more particularly to data encryption.

### BACKGROUND

With the growing use of remote communications lines to transfer information between processing systems, between terminals and remote data banks, and between terminals connected to the same or different computers, the need to safeguard the information being transferred has grown. In the banking industry, there is a growing need to prevent the fraudulent modification of "electronic money" in electronic funds transfer. Similar needs exist in business to prevent the disclosure of sensitive data. In the government sector, present and/or future privacy acts place restrictions on the ability to access sensitive information. This need to safeguard sensitive information is likely to grow as future privacy legislation will most probably impose information communications security requirements on the private sector.

With the exponential growth of the internet, increasing amounts of sensitive information are transmitted over non-secure communication links. A non-secure communication link is a communication medium wherein the transmission is subject to eavesdropping by unintended parties. For example, billing information to complete an e-commerce transaction is likely to be sent over numerous networks en route to the recipient. While the billing information is transmitted over a network, a person with access to the network can potentially record the billing information and use the billing information to place fraudulent charges.

Additionally, with the growth of wireless technology, such as cellular telephones and wireless internet access, large amounts of information are transmitted over the air interface. A radio signal transmitted over the air interface is subject to reception by virtually anyone with an appropriately tuned receiver, as opposed to only the intended recipient. The information contained in the radio signal transmission can also be used for malicious purposes.

Furthermore, the need to safeguard information is not limited to transmitted information, but also extends to information storage systems. Access to such computer and database systems is secured against unauthorized usage by a number of mechanisms, such as the requirement of a password. However, recent attacks against the yahoo.com and the Federal Bureau of Investigation web sites have bypassed even the most sophisticated access security.

Encryption is commonly used to protect both stored and transmitted information in computer networks and information storage systems. Sensitive information is placed in an unintelligible format in accordance with an encryption algorithm. The encrypted data is then sent over a non-secure communication link. Any unintended party receiving and recording the transmission is unable to extract the information contained therein. Likewise, data in databases can similarly be encrypted, thereby preventing unauthorized parties from extracting the information.

An ideal encryption algorithm is impossible to invert without the knowledge of specific data, known as a key. Available encryption algorithms are invertable through exhaustive computations without the knowledge of the key. The actual number of computations required to invert the encryption algorithm must be high enough so that even at the fastest available computational speeds, an excessive amount of time is required.

However, computational speeds of microprocessors continue to grow at exponential rates. As the computational speeds of microprocessors grow, the requirements of encryption algorithms also increase. Accordingly, it would be advantageous if an encryption process could be devised which could meet the highest requirements.

### SUMMARY

A system, method, and apparatus for encrypting a message are presented herein. A password is encrypted using a polymorphous encoding function which generates an encrypted password. The encrypted password is used as a seed for a one-time pad generator which generates a mask for the message.

### BRIEF DESCRIPTION OF THE DRAWINGS

FIGURE 1 is a block diagram of a representative hardware environment;
FIGURE 2 is a flow diagram describing the operation of a polymorphous coding system;
FIGURE 3 is a block diagram of an exemplary substitution matrix;
FIGURE 4 is a flow diagram describing the operation of a polymorphous coding function encoding a string;
FIGURE 5 is a block diagram of an exemplary one-time pad (OTP) generator;
FIGURE 6 is flow diagram describing the generation of an OTP;
FIGURE 7 is a flow diagram describing the decryption of an encrypted message; and
FIGURE 8 is a flow diagram describing the operation of the decoding function.

### DETAILED DESCRIPTION OF PREFERRED EMBODIMENTS

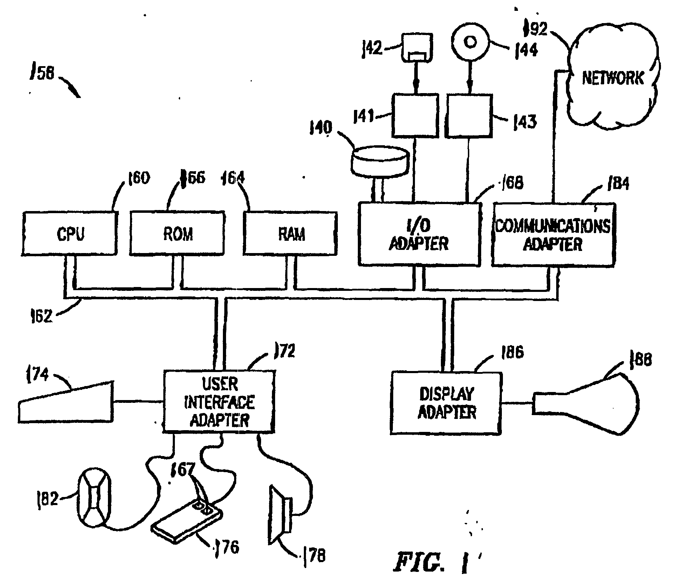

Referring now to FIGURE 1, a representative hardware environment for practicing the present invention is depicted and illustrates a typical hardware configuration of a computer system 158 in accordance with the subject invention, having at least one central processing unit (CPU) 160. CPU 160 is interconnected via system bus 162 to random access memory (RAM) 164, read only memory (ROM) 166, input/output (I/O) adapter 168, user interface adapter 172, and communications adapter 184. The I/O adapter 168 connects I/O devices such as hard disc units 140, and disc drives 141, 143 for reading removable memory such as floppy discs 142 or optical discs 144 to the system bus 162. The user interface adapter 172 connects keyboard 174, mouse 176, speakers 178, microphone 182, and/or other user interfaced devices such as a touch screen device (not shown) to the system bus 162. The communication adapter 184 connects the computer information handling system 158 to a data processing network 192, via a communication medium, such as an in-band or out-of-band connection. The data processing network 192 can contain one or more additional interconnected computer information handling systems 158.

The hard disc unit 140 can be used to store large amounts of information. Additionally, information can also be stored on removable memory, such as floppy discs 142 and optical discs 144. Sensitive information stored in the hard disc unit 140 can be protected by restricting access to the computer information handling system 158. Access to such computer information handling system 158 is secured against unauthorized usage by a number of mechanisms, such as a firewall and the requirement of a password. However, recent attacks against the yahoo.com and the Federal Bureau of Investigation web sites have bypassed even the most sophisticated access security.

The communications adapter 184 is used to transfer information over the communication medium from one computer information handling system 158 to another computer information handling system 158 in the data processing network 192. Because the communication medium is not completely under the control of the user, information transmitted thereon is particularly susceptible to eavesdropping or even outright interception by unintended parties. The present invention proposes protecting stored or transmitted information by use of an encryption program.

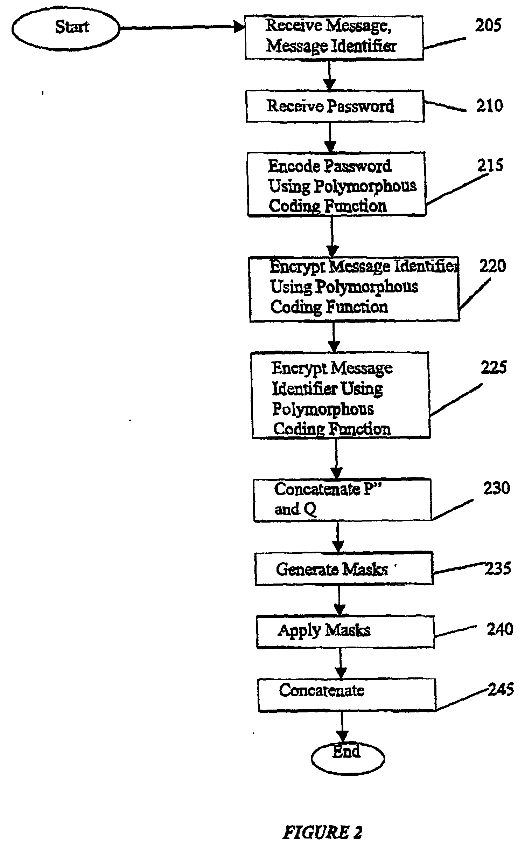

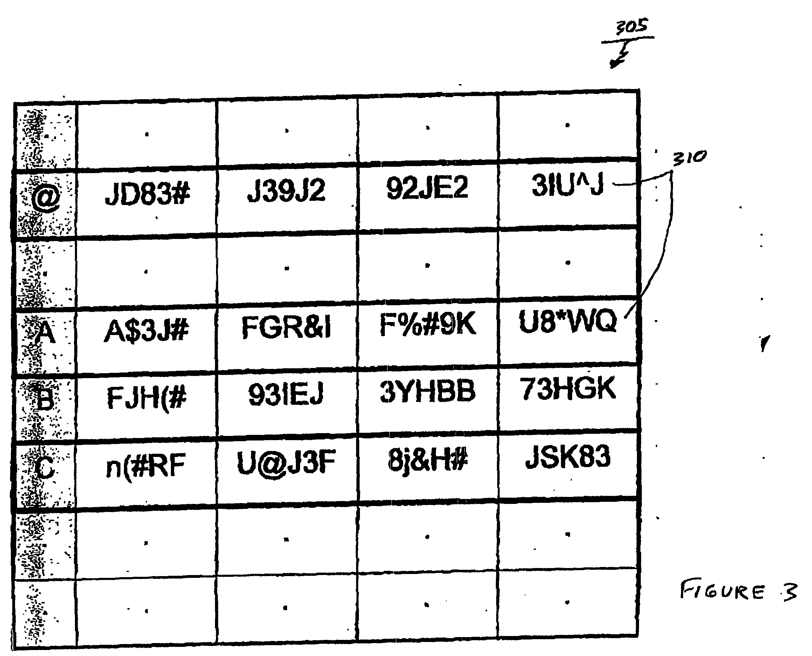

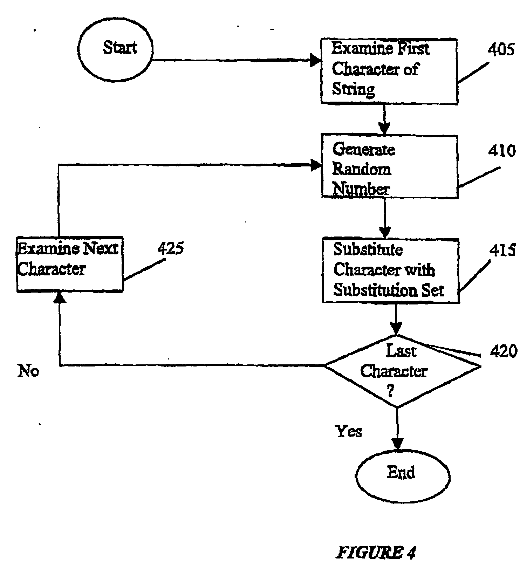

Referring now to FIGURE 2, there is illustrated a flow diagram describing the operation of a polymorphous coding system. At step 205, a message, M, to encrypt is read, along with an identifier for the message, M_id. The message can contain a string of characters from a predetermined character set, such as ASCII. At step 210, a password, P, is received from the user. At step 215, the password is encoded, P', using a polymorphous coding function. The polymorphous coding system for encoding a string of characters, such as the password, using the polymorphous coding function is described with reference to FIGURES 3 and 4.

Referring now to FIGURE 3, there is illustrated a block diagram of an exemplary substitution matrix 305 which is received by a polymorphous coding function. The substitution matrix comprises a plurality of rows and columns. Each row corresponds to a particular one of the characters of the predetermined character set. For example, wherein the predetermined character set is the ASCII character set, the matrix comprises 256 rows, wherein each row corresponds to a particular one of the ASCII characters.

Each row comprises an array of any number of substitution symbol sets 310. The greater the number of substitution sets 310 in each row, the greater the security. However, a larger number of substitution symbol sets 310 also requires greater computation power. The string of characters forming the substitution set 310 are randomly generated. Those skilled in the art will recognize that the number of characters in each substitution symbol set 310 must be sufficient to allow for a sufficient number of permutations, such that each substitution symbol set in the substitution matrix is unique.

Referring now to FIGURE 4, there is illustrated a flow diagram describing the operation of the polymorphous encoding function encoding a string, such as the password. The first letter of the string is examined (step 405) and a random number is generated (step 410). The random number is scaled to uniform distribution to select an integer between zero and the number of substitution sets minus one. At step 415, the character of the string is substituted with the substitution symbol set 310 corresponding to the row of the character and the column associated with the scaled random number. At step 420, a determination is made whether the character is the last character of the string. Wherein the character is not the last character of the string, the next character is examined (step 42S) and steps 410-425 are repeated until the last character is substituted and such a determination is made during step 420. When the determination is made during step 420 that the last character of the string is reached, the process for encrypting the string is complete, and the encrypted string is generated.

Referring again to FIGURE 2, the encrypted password, P', derived from step 215 is again encrypted using the polymorphous encoding function (step 220) to provide P". At step 225, the message identifier, M_id is encrypted using the polymorphous encoding function to provide Q. At step 230, the bits of P" and Q are concatenated, yielding the result R, and r, wherein r is the length of R, R is used to form the header of the message M. The foregoing header R and the message M are next masked by the output of a one-time pad (OTP) generator. The password, P, and r are input to the OTP generator to form the mask for the header R while the encoded password, P', and the length of the message, m are input to the OTP generator to generate a mask for the message, M (step 235).

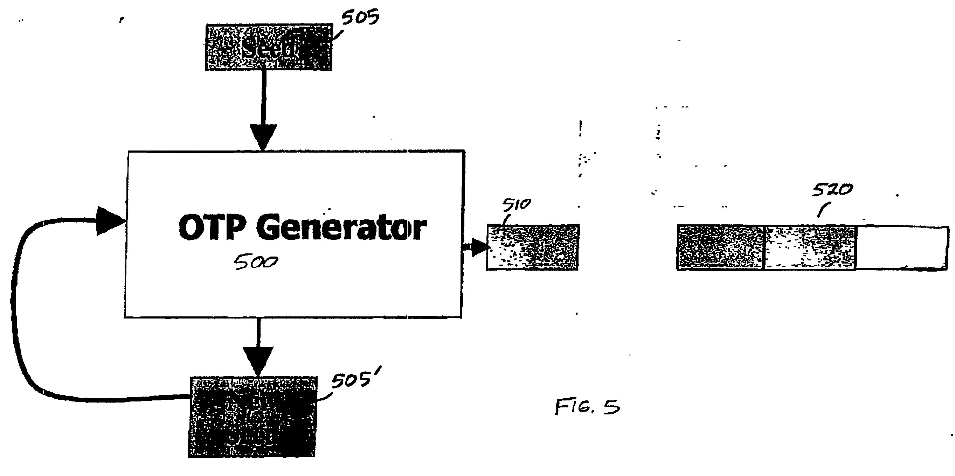

Referring now to FIGURE 5, there is illustrated a block diagram of an exemplary CTP Generator 500. The OTP generator 500 receives an input seed 505, Responsive to receiving the seed 505, generates output bits 510 and a new seed 505'. The new seed 505' can continuously be reentered into the OTP generator 500. As the new seed is reentered into the OTP Generator 500, additional output bits 510 are generated. The output bits 510 can be concatenated to provide a growing string of bits, known as an OTP 520. The OTP 520 can be used as a mask for the message or header, provided that the length of the OTP 520 is equal to or exceeds the length of the message or header. Accordingly, the new seed 505' can be continuously be reentered into the OTP generator 500 until the OTP 520 is equal to or exceeds the length of the message or header. The operation of an exemplary OTP generator 500 is described in Appendix A.

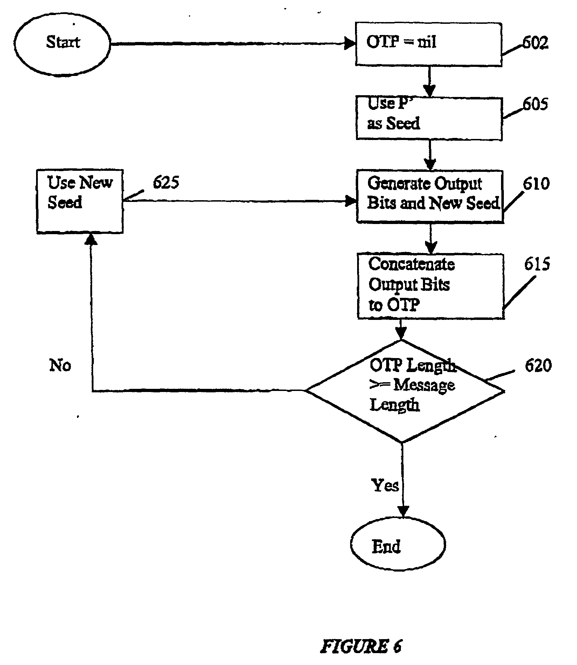

Referring now to FIGURE 6, there is illustrated a flow diagram describing the generation of the OTP 520 for masking a message, M, of length m. At step 602, the OTP 520 is initialized to comprise the empty set. At step 605, the encoded password, P' is input as the initial seed 505 to the OTP generator 500 and output bits 510 and a new seed 505' are generated (step 610). At step 615, the output bits are concatenated with the OTP 520 to extend the OTP 520. During step 620, the OTP 520 is examined to determine whether the length of the OTP is equal or exceeds m, Wherein the length of the OTP 520 is less than m, the new seed 505' is input to the OTP generator 500 (step 625) and steps 610-625 are repeated until the length of the OTP 520 is equal to or exceeds m. When the length of the OTP 520 exceeds m, the OTP 520 can then be used to mask (logical exclusive-OR, XOR) the message M, and the generation of the OTP 520 is complete.

The OTP generator 500 generates a mask for the header R, in a similar matter, wherein the password, P is used as the initial seed during step 605, and the length of the OTP 520 is compared to the length of the header, r during step 620.

Referring again to FIGURE 2, the OTP masks for the header and the message obtained during step 235 are applied to the header and the message (step 240) and the masked header, and masked message are concatenated (step 245) to form the encrypted message.

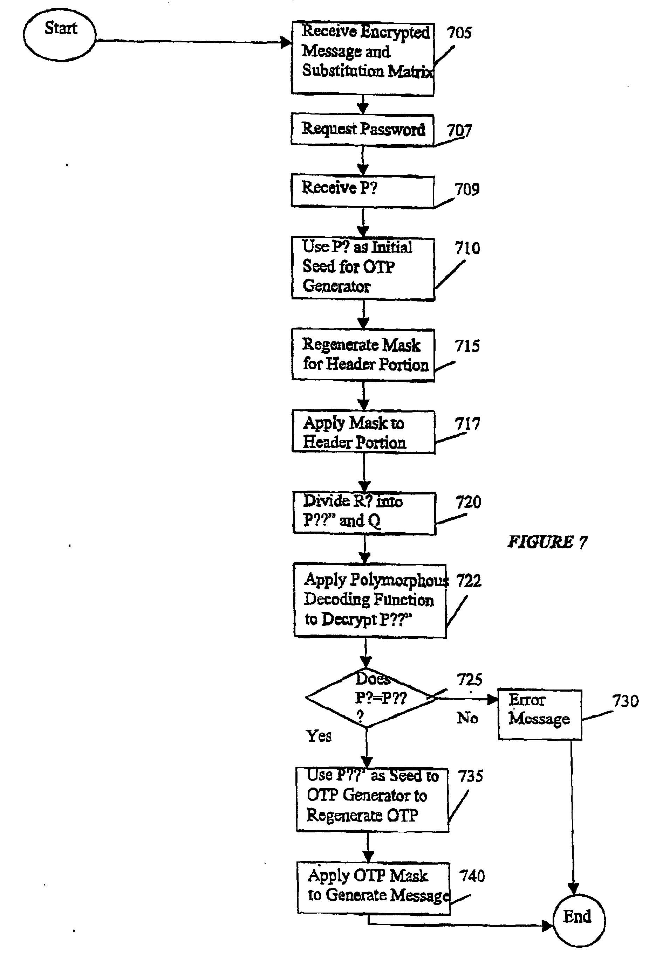

Referring now to FIGURE 7, there is illustrated a flow diagram describing the decryption of an encrypted message. At step 705, the encrypted message, E is received, along with the substitution matrix. The encrypted message E comprises a header portion EO (of length r) and a message portion El (of length m), At step 707, the user is requested to provide the password, P, used during the encryption of the message. The user's response P? is received during step 709. It is noted that the password provided by the user, P?, must match the password used during the encryption for the remaining steps to properly decrypt the encrypted message E.

At step 710, the user's response P?, and r are provided as parameters to the OTP generator 500. During step 715, the OTP generator 500 regenerates a mask for the header portion E0. The regenerated mask is applied to the header portion E0 of the encrypted message, and the header R? is regenerated (step 717). During step 720, the header R? is divided into portions P??" and Q. The portion P??" is then twice decrypted using a polymorphous decoding function and substitution matrix (step 722) obtaining P??' after the first decryption and P?? after the second decryption.

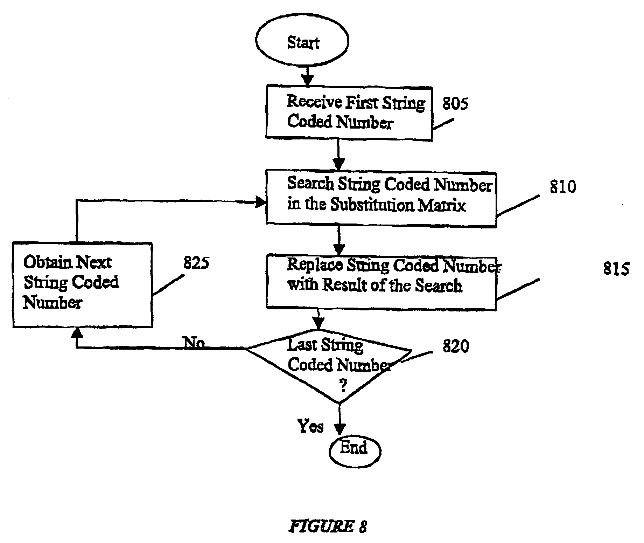

Referring now to FIGURE 8, there is illustrated a block diagram describing the operation of a polymorphous decoding function decrypting a string. At step 805, the first string coded number of the string is received. The substitution matrix 305 is searched for a substitution set 310 matching the string coded number (step B10). The particular character associated with the substitution set 310 matching the string coded number is used to replace the coded number in the string (step 815). At step 820, a determination is made whether the string coded number substituted during step 815 was the last string coded number in the string. Wherein the string coded number substituted during step 815 is not the last string coded number in the string, the next string coded number is received (step B25) and steps 810-825 are repeated. Wherein the string coded number substituted during step 815 is the last string coded number in the string, the process is completed.

Referring again to FIGURE 7, The result, P?? is then compared to the password provided by the user P? during step 725. The password provided by the user, P?, and p?? will only match, wherein the password P? provided by the user matches the password P used during the encryption process, Wherein the password provided by the user, P? does not match P?? during step 725, the user has provided an incorrect password, P?, the encrypted message E cannot be decrypted, and the user is so notified (step 730).

Wherein the password provided by the user, P? does match P??, P??' is used as a seed to the OTP generator 500 to regenerate the mask, OTP, used to mask the message (step 735). During step 740, the OTP mask is applied to the message portion El of the encrypted message E and the original message is reconstructed.

Although preferred embodiments of the present inventions have illustrated in the accompanying Drawings and described in the foregoing Derailed Description, it will be understood that the inventions are not limited to the embodiments disclosed, but are capable of numerous rearrangements, modifications and substitutions without departing from the spirit of the invention. For example, in one embodiment, the inventions can be implemented as a set of executable instructions stored in a computer readable memory. Therefore, the invention is only defined as set forth by the following claims and equivalents thereof.

## Claims

1. A method for encrypting a message, said method comprising:
encrypting a password using a polymorphous coding function to generate an encrypted password; and
generating a one-time pad from a one-time pad generator, wherein the encrypted password is a seed for the one-time pad generator.

2. The method of claim 1, further comprising:
masking the message using the one-time pad.

3. The method of claim 1, wherein the password comprises a plurality of characters, and wherein encrypting the password using the polymorphous coding function further comprises:
examining a first character of the plurality of characters;
generating a first random number;
selecting a substitution set, wherein the substitution set is associated with the first character and the first random number.

4. The method of claim 1, wherein generating the one-time pad from a one time pad generator further comprises:
generating a first set of output bits from the one-time pad generator, wherein the seed is the password;
generating a new seed; and
generating a second set of output bits from the one-time pad generator, wherein the seed is the new seed.

5. An article of manufacture, said article of manufacture comprising a computer readable medium, wherein the computer readable medium stores a plurality of executable instructions, wherein the plurality of executable instructions comprise means for:
encrypting a password using a polymorphous coding function to generate an encrypted password; and
generating a one-time pad from a one-time pad generator, wherein the encrypted password is a seed for the one-time pad generator.

6. The article of manufacture of claim 5, wherein the plurality of executable instructions further comprise means for:
masking the message using the one-time pad,

7. The article of manufacture of claim 5, wherein the password comprises a plurality of characters, and wherein the means for encrypting the password using the polymorphous coding function further comprises means for:
examining a first character of the plurality of characters;
generating a first random number;
selecting a substitution set, wherein the substitution set is associated with the first character and the first random number.

8. The article of manufacture of claim 5, wherein the means for generating the one-time pad from a one time pad generator further comprises means for:
generating a first set of output bits from the one-time pad generator, wherein the seed is the password;
generating a new seed; and
generating a second set of output bits from the one-time pad generator, wherein the seed is the new seed.

9. A system for encrypting a message, said system comprising:
a polymorphous encoding function for encrypting a password, wherein the polymorphous encoding function generates an encrypted password; and
a one-time pad generator for generating a one-time pad, wherein the encrypted password is a seed for the one-time pad generator.

10. The system of claim 9, further comprising:
a substitution matrix for substituting characters, said substitution matrix comprising!
a plurality of rows, wherein each one of the plurality of rows is associated with a particular character and comprises a plurality of substitution sets; and
wherein the substitution matrix is received by the polymorphous coding function.

11. The system of claim 10, further comprising:
a random number generator for selecting a particular one of the substitution sets from a particular one of the plurality of rows.
